Europäisches Patentamt

European Patent Office

Office européen des brevets

(11) Publication number: 0 347 782
A1

## EUROPEAN PATENT APPLICATION

(21) Application number: 89111028.0

(22) Date of filing: 17.06.89

(51) Int. Cl.4: B23K 35/00 , B23K 1/20 , H01R 43/02 , //C25D5/10

(30) Priority: 22.06.88 US 209707

(43) Date of publication of application:
27.12.89 Bulletin 89/52

(84) Designated Contracting States:
AT BE CH DE ES FR GB GR IT LI LU NL SE

(71) Applicant: HUDSON WIRE COMPANY

Ossining New York(US)

(72) Inventor: Schatzberg, Myron D.,
Cherokee Hill Farm 707 Hunting Country
Road
Tryon North Carolina 28782(US)

(74) Representative: Berkenfeld, Helmut, Dipl.-Ing.
An der Schanz 2
D-5000 Köln 60(DE)

(54) Method of forming solderable wire and connector consisting of such wire.

(57) A wire having enhanced solderability characteristics is formed by applying a very thin uniform coat of silver to a clean copper wire substrate. A coat of tin is plated on top of the silver. Heat treatment causes the silver and tin to form an interface alloy. The heat treatment occurs prior to a draw down to final size. The device can be other than a wire and the substrate can be other than copper.

EP 0 347 782 A1

FIG.2

# METHOD OF FORMING SOLDERABLE WIRE AND CONNECTOR CONSISTING OF SUCH WIRE

## Background of the Invention

This invention relates to electronic interconnect devices, such as wires and terminals, which have enhanced solderability characteristics, and to a method for forming such devices.

Both lead wires and hook-up wires are soldered to other wires or to other connectors to create electrical connections as required for a wide variety of purposes. The bond made by the soldering, to avoid such problems such as circuit failure, must be both mechanically and electrically secure. Interconnect problems are costly and dangerous. For example, in the military, interconnect problems may be the largest single source of electronic equipment down time.

Solderable wire generally is formed by tin plating on a copper substrate core. Ideally, the tin plate reacts with the tin-lead alloy of the solder to create a bond during the soldering process. However, either prior to the soldering or during the soldering process the tin interacts with the core metal to form interface compounds such as $Cu_6Sn_5$ and $Cu_3Sn$ which are not capable of forming a secure bond with the solder. This results in an unstable connection being formed. These interface compounds will form over time at room temperature or more quickly when heat is applied to the wire during soldering or annealing. Additionally, tin is permeable to oxygen resulting in substrate oxides, which like the other interface compounds, weaken the mechanical bond between the solder and the connector.

Many tin-plated copper insulated wires show a lack of solderability after only one hour of steam aging. This is of particular significance in military situations where it is required that insulated wires retain their solderability from four to eight hours of steam aging.

One solution to provide a solderable wire is to plate the wire core with silver rather than tin. The silver does not oxidize or react with the core to form interface compounds and is left free to create a strong bond with the solder. However, silver is expensive to use.

Accordingly, it is a purpose of this invention to provide an improved solderable wire which forms stable mechanical and electrical bonds.

Yet a further purpose of this invention is to provide such a wire which has an enhanced shelf life. Another purpose of this invention is to provide such a wire which is economical to produce.

Yet another object of this invention is to provide such a wire which can retain its solderability after four to eight hours of steam aging.

## Brief Description

In brief, this invention involves a wire having enhanced solderablity characteristics. The wire is formed by applying a thin, uniform coat of silver to a clean wire substrate, such as copper. A coat of tin is plated on top of the silver coat.

A heat diffusion stage is performed to diffuse the silver and tin into one another. Then the wire is drawn to an appropriate size and annealed.

## The Figures

FIG. 1 is a longitudinal sectional view through the surface of a segment of a wire embodiment of this invention. The various layers 14, 16, and 18 are not shown in proportional thickness. However, only a portion of the section through the substrate 12 is shown in order to retain some approximate degree of proportionality.

FIG. 2 is a flow chart diagram illustrating the method of manufacture of the FIG. 1 wire.

## Description of the Preferred Embodiments

As shown in the FIGs., the improved solderable wire 10 of the present invention includes a wire substrate or core 12 formed of an appropriate metal such as copper or iron. Outboard of the substrate is a silver layer 14. Outboard of the silver layer 14 is an interface alloy layer 16 of silver and tin. Outboard of alloy layer 16 is a tin layer 18. Wire 10 may, by itself, be used as a solderable connector, or a plurality of wires, substantially similar to wire 10, may be twisted to form a stranded connector wire.

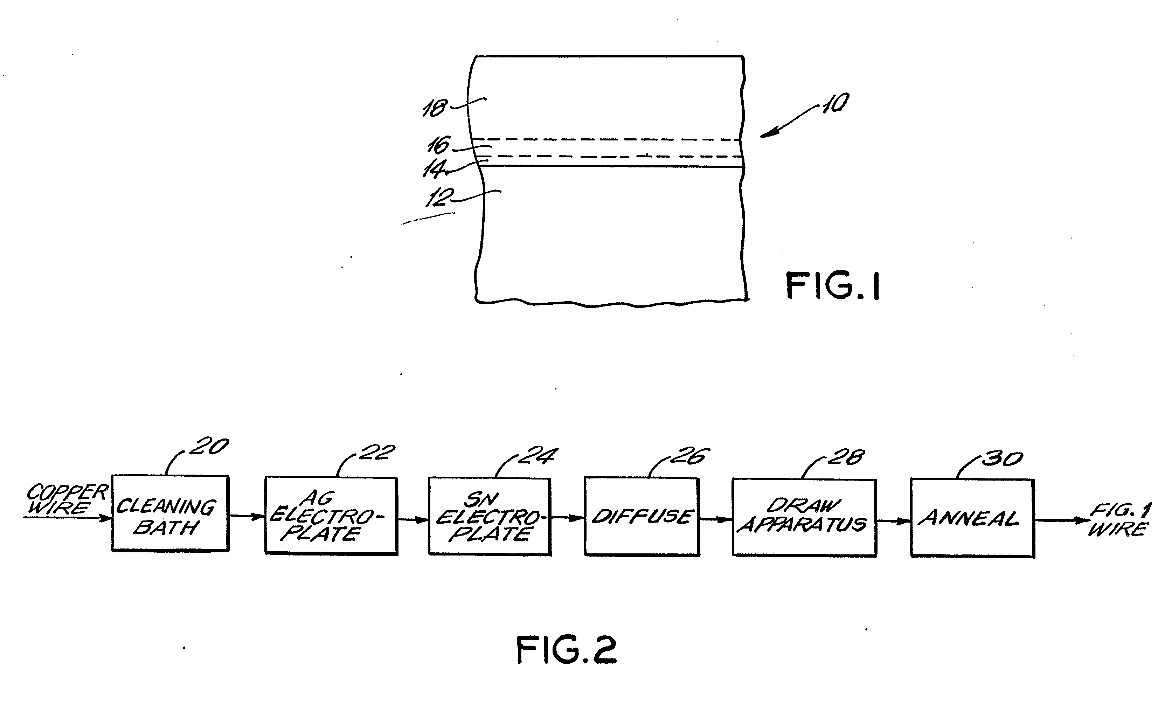

As shown in FIG. 2, the method of making one embodiment of the wire 10 is to feed copper wire through a cleaning bath 20 and then through a first electro-plating bath 22 wherein a thin uniform layer of silver is deposited along the entire surface of the copper wire. The silver plated wire is then fed through a second electro-plating bath 24 in which tin is deposited in a substantially uniform fashion over the entire surface of the silver plated wire. The output from tho electro-plating bath 24 is a wire having a copper substrate on which there is a very thin silver layer and on top of that there is a tin layer. The plated wire so provided is normally provided at a diameter substantially greater than is used for element leads or for hook-up wires. The next stage 26 is a heat diffusion stage. The temperature provided during this heat diffusion stage is such as to cause the silver and tin plates to diffuse sufficiently into one another to form a silver-tin alloy. The next stage is a drawing stage 28 which involves a draw apparatus to draw the wire down to the desired diameter. This drawing constitutes a cold working which requires that an annealing stage 30 follow. A pre-draw step may be used in which the copper wire is drawn to a predetermined size before it is plated. This pre-draw step does not obviate the need for the drawing stage 28.

When a multi-wire stranded conductor is made, an additional stranding stage is needed. The stranding stage is performed after the drawing stage 28 and either before or after the annealing stage 30.

In one embodiment, the wire 10 is a 24 gauge wire to be used as a non-stranded single wire conductor. The amount of silver deposited is about 0.15 of one percent (0.15%) by weight of the copper substrate, and the amount of tin deposited is between about 5.4% to about 5.8% by weight of the copper wire substrate.

In another embodiment, the wire 10 is a 32 gauge wire. It is intended that nineteen such wires are to be twisted to form a multi-wire stranded conductor. The stranded wire conductor is 20 gauge. The amount of silver deposited on a 32 gauge wire 10 is about one half of one percent (0.5%) by weight of the copper substrate, and the amount of tin deposited is between about 3.9% to about 4.1% of the weight of the copper wire substrate.

The amounts and proportions of silver and tin used to form wire connectors in accordance with the present invention changes depending upon the diameter of the wire to be formed.

Thus in a 32 gauge wire, a much greater percentage of silver and a somewhat lower percentage of tin is employed than in a 24 gauge wire. But because the 32 gauge wire is so much smaller than the 24 gauge wire, the amount of silver per unit of length is about the same while the amount of tin per unit of length is substantially less in the smaller diameter 32 guage wire.

The optimum thickness of the interface alloy layer is a function of the diameter of the wire. The proportional thickness of the interface alloy layer and the amount of silver and tin affect the solderability characteristics of the wire. The end product wire conductor must provide good solderability without degrading conductivity.

If, for example, the 32 gauge wire were made with the same amount of tin as is used for the 24 gauge wire, there would be excessive resistance and the 32 gauge strands would not be as useful for stranded wire. The percentage by weight of tin tends to stay roughly constant as wire diameter varies. But for wire used as elements of stranded cable, the percentage by weight of tin is reduced as much as possible while retaining enough tin to achieve solderability.

By contrast, the amount of silver used remains approximately the same as wire diameter varies and thus the percentage by weight of silver increases as wire diameter decreases. Indeed in the example given, the increase of silver percentage from 0.15% for 78 mil wire (24 gauge) to 0.5% for 50 mil wire (32 gauge) results in some increase in silver per unit length.

Twenty-four gauge wire 10 is made by plating a thin, uniform coat of silver on a clean copper wire substrate in the following manner: Two hundred and seventy-five feet (83.8 meters) of wire per minute is run through a plating bath 22 at a current of thirty-three amperes. Multiple wrap plater equipment is used in which twenty-four wraps travel at the same time. The wire diameter is 0.078 inches (0.195 cm). There are fifty feet (15 meters) per wrap. Thus twelve hundred feet (365 meters) of wire are in the plater at a time. This means a current density of 1.3 amperes per square foot (14 amps./m²). The dwell time in the plater is 4.36 minutes. Assuming a one hundred percent cathode efficiency, the resulting wire is 0.15 of one percent (0.15%) by weight silver.

Subsequent to the plating of the silver on the substrate, the tin is plated on the silver by a standard tin plating procedure 24. About seventy-five feet (23 meters) of wire per minute are exposed to the electro-plating in a twenty-four wrap multiple wrap plater. The dwell time is sixteen minutes resulting in approximately five percent by weight of tin on the wire.

Subsequent to the plating of the tin, the wire is placed into a sealed retort to allow diffusion of the silver into the substrate. This is a four cycle process. In the first cycle, nitrogen is used at room temperature to purge oxygen from the retort. The cycle takes approximately 1.5 hours. In the second cycle, the retort is placed under a heating mantel for about two hours until a temperature of 165 degrees Centigrade (320° F) is reached. In the third cycle, the retort is held under the heating mantel at 165° for about one and one half (1.5) hours. This temperature allows diffusion between the tin and silver layers while avoiding diffusion between the silver and the substrate layers. In the fourth cycle, the heating mantel is removed from the retort, and the retort is quenched with water for about three hours until it cools to room temperature.

After the heat diffusion, the wire is drawn to size. Subsequent to the drawing of the wire, it is annealed in a process substantially identical to the diffusion process.

The diffusion step 26 is made before the drawing of the wire because it has been found preferable to diffuse when the thickest layer of silver exists. If the diffusion is done after the drawing of the wire, there is less uniformity in the interface alloy layer. The greater the uniformity of the interface, the better are the solderability characteristics.

During the heat diffusion step 26, the tin-silver alloy layer 16 is formed. It is this tin-silver alloy layer which prevents formation of undesirable copper-tin interface compounds and which permits the wire of the present invention to form stable solderable bonds in an economic manner. Although most of the silver diffuses into the tin to form the tin-silver alloy 16, it is probable, and preferable, that a small silver layer 14 remains. The solderable wire produced by this method has a long shelf life and can be used to create long lasting mechanical and electrical bonds.

Thirty-two gauge wire 10 to be used for multi-wire stranded conductor is made in a process substantially similar to that described above except that the specific amounts of tin, silver and copper substrate used, as well as the specific details concerning the plating steps differ. Further, after the wire is drawn but either before or after the annealing stage, the appropriate number of wires 10 are twisted to form a standard conductor. In one embodiment of the invention, nineteen 32 gauge wires 10 are twisted in an equilay concentric arrangement. Six wires 10 are twisted about one non-twisted wire 10 to form a seven wire core. Then the remaining twelve wires 10 are twisted about that seven wire core. The entire nineteen wire conductor is twenty gauge.

More particularly, thirty-two gauge wire 10 is made by plating a thin, uniform coat of silver on a clean copper wire substrate in the following manner: two hundred and fifty feet (76.2 meters) of wire per minute is run through a plating bath 22 at a current of fifty-six amperes. Multiple wrap plater equipment is used in which twenty-four wraps travel at the same time. The wire diameter is 0.05 inches ().127 cm). There are nine and one-half feet (2.9 meters) per wrap. Thus, two hundred twenty-eight (69.5 meters) of wire are in the plater at any one time providing 2.6 square feet (0.25m²) of wire surface exposed to plating at a time. This means a current density of 21.5 amperes per square foot (231 amps./m²). The dwell time in the plater is 54.6 seconds. Assuming a one hundred percent cathode efficiency, the resulting wire is one-half of one percent (0.5%) by weight silver.

It has been found when a stranded wire conductor is formed that abrasion of the outer surface of the wires must be avoided. To avoid abrasion, the standard tubular stranding apparatuses is modified as follows:

The strander head plate and nose plate are redesigned to use an all plastic construction. Normally, the wire guides in the metal plates consist of carbide or ceramic inset eyelets. These guides are too abrasive and are replaced with guides made of ultra-high molecular weight polyethylene, UHMW-1900 which has a low co-efficient of friction and high cut-through resistance. All of the surfaces on which the wire slides within the strander must also be replaced with this less abrasive plastic material. This includes all center guide bushings as well as the barrel mounted wire guide.

Although this invention has been described in connection with the specific wire connector embodiment with which the invention has been tested, it should be understood that the solderability problem affects not only component lead wires and hook-up wires but also the various terminals and connectors to which these wires are soldered. Those terminals, such as terminal posts, lugs and terminal openings, are all elements which can be usefully fabricated employing the technique of this invention.

## Claims

1. Method of forming solderable wire comprising the steps of:
applying a thin uniform coat (14) of silver to a clean wire substrate (12),
applying a tin coat (18) on top of said silver coat (14),
diffusing said silver and said tin into each other at a temperature and for a time sufficient to create an interface alloy (16) between said silver (14) and said tin (18) such that the outermost layer of said solderable wire (10) is tin and the layer immediately below said tin layer is said interface alloy layer,
and drawing (28) said wire (10) after said step of diffusing (26) to a desired diameter.

2. Method of claim 1, characterized in that the weight of silver on said wire is about 0.5 % of the weight of said substrate.

3. Method according to anyone of claims 1 and 2, characterized in that the weight of tin on said wire is between 3.9 % to about 4.1 % of the weight of said substrate.

4. Method according to anyone of claims 1 to 3 wherein said wire is approximately thirty-two gauge wire further comprising the step of:
twisting nineteen of said wires in an equilay concentric arrangement such that six of said wires are twisted about one non-twisted wire to form a seven wire core and such that the remaining twelve wires are twisted about said seven wire core to provide a twisted wire conductor.

5. Method according to anyone of claims 1 to 4, characterized by annealing said wire after said step of drawing.

6. Method according to anyone of claims 1 to 5, characterized in that the percentage by weight of silver applied increases as wire diameter decreases to provide an approximately constant amount of silver per unit length of wire.

7. Method according to anyone of claims 1 to 6, characterized in that the amount of tin applied per unit length decreases as wire diameter decreases to maximize conductivity.

8. Connector consisting of wires made according to the method according to anyone of claims 1 to 7, charac terized by
a plurality of copper wire strands twisted in a manner to form a stranded wire, each wire strand of said plurality of copper wire strands having a tin coat on its outer surface and a silver-tin alloy generated by the diffusion of silver and tin along the interface between each copper wire and its associated tin coat.

9. Connector according to claim 8, characterized in that the weight of silver in each copper wire strand is about 0.5 % of the weight of the strand and wherein the weight of tin in each copper wire strand is about 3.9 % to about 4.1 % of the weight of said strand.

FIG.1

COPPER WIRE → CLEANING BATH (20) → AG ELECTRO-PLATE (22) → SN ELECTRO-PLATE (24) → DIFFUSE (26) → DRAW APPARATUS (28) → ANNEAL (30) → FIG.1 WIRE

FIG.2

EP 0 347 782 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 3, no. 90, 31st July 1979, page 108 E 127; & JP-A-54 68 986 (HITACHI DENSEN K.K.) 06-02-1979 * Abstract * | 1 | B 23 K 35/00 B 23 K 1/20 H 01 R 43/02 // C 25 D 5/10 |
| A | FR-A-2 518 440 (MTA KOZPONTI KEMIAI KUTATO INTEZET et al.) | | |
| A | FR-A- 932 746 (INTERNATIONAL STANDARD ELECTRIC CORP.) | | |
| P,X | US-A-4 756 467 (M.D. SCHATZBERG) * Whole document * | 1,7 | |

TECHNICAL FIELDS SEARCHED (Int. Cl.4)

B 23 K
C 25 D
H 01 R

The present search report has been drawn up for all claims

| Place of search | Date of completion of the search | Examiner |
|---|---|---|
| THE HAGUE | 20-09-1989 | MOLLET G.H.J. |